# EUROPEAN PATENT APPLICATION

(11) **EP 1 443 664 A1**
(43) Date of publication of application: **04.08.2004**
(21) Application number: 03001980.6
(22) Date of filing: 30.01.2003
(51) Int. Cl.: H04B 1/20, G08C 17/02, H04B 1/08

(54) **A vehicle audio system**

(71) Applicant: SIEMENS AKTIENGESELLSCHAFT, 80333 München (DE)
(72) Inventor: Braet, Patrick, Singapore 597628 (SG)

(57) **Abstract**

A vehicle audio entertainment unit comprises audio processing facilities (24) for converting a received input signal stream into an audio representation and is arranged for communicating with a discrete control and/or display facility (20, 26, 28) that represents a user interface. In particular, for executing the communicating the audio unit is equipped with a radio-frequency command and control link (22) whilst allowing the communicating without mechanically engaging with the control and/or display facility. The system can be made extendible through further facilities.

## Description

The invention relates to a vehicle audio entertainment unit comprising audio processing facilities for converting a received input signal stream into an audio representation, and being arranged for communicating with a discrete control and/or display facility that represents a user interface, such as being recited in the preamble of Claim 1. The audio functionality may represent a radio, tape recorder, CD/DVD drive, or other. Such vehicle audio entertainment units have been in common use in combination with a detacheable front unit, so that effective detaching of the front unit would render the remaining apparatus inoperative, as an anti-theft strategy. The attaching of the front unit needs some click mechanism or another type of mechanical engaging. In fact, many such audio units have been constructed in such manner that removal thereof from the vehicle would be comparatively easy, but the detaching of the front unit will discourage thieves.

The present inventor, while considering the usefulness of the above approach, has recognized a different problem, in that the necessity for mounting such audio unit in a standard-size aperture would severely restrict the development of audio units. In fact, at present such audio units may be well integrated into the dashboard, both in terms of a styling that fits into the overall design, and also in that control and display facilities related to such audio unit are integrated into the overall dashboard. All of these items may alone or collectively form part of an aesthetical or ergonomic user interface. The present inventor has found that such approach would however restrict the application of the audio units in that upgrading or changing the units would be rendered difficult for reasons of different mounting schedules, different controls or displays, and other differences.

In consequence, amongst other things, it is an object of the present invention to separate the design of the control and/or display facility from the functionality of the vehicle audio entertainment unit proper.

Now therefore, according to one of its aspects, the invention is characterized by said audio unit for executing said communicating comprising a radio-frequency command and control communication link whilst allowing said communicating without mechanically engaging with said control and/or display facility. Amongst other things, the invention allows the display and control to be installed in any convenient location. In fact, the control and display may be combined into a single physical unit, commonly referred to as the front panel. In doing so, the front panel would not need powering from the audio unit proper. This will diminish the number of necessary connecting channels running between the front panel and the main audio unit to only those intended for data transfer. In fact, the control and/or display unit may either have its own battery power or derive power from the main vehicle system.

By itself, remote control of audio entertainment units has been undertaken for audio systems in a home environment. In such prior systems however, both the object of such separation, and also the practical implementations will differ widely from the present invention. First, in the prior art the audio unit proper will generally have itself a separate manually operable user interface. In contradistinction, the audio unit of the present invention will generally be "hidden" from view, thereby relinquishing general requirements for a pleasing exterior thereof. Such exterior could then be quite plain, apart from technically necessary features. Furthermore, in the earlier home systems, the position of the main audio unit is fixed, and the problems to be solved are related to the ***distance*** from and position relative to the human user. In particular when using infrared (IR) remote control systems, the IR light path has to be free from physical obstruction, reflections and other light interferences, such as sunlight. According to the invention, the position of the audio entertainment unit itself may vary, and the distance to the control and/or display unit may be inconsequential.

According to the present invention, the control unit and the display may be equipped with batteries or be connected to the power supply of the vehicle, at any suitable position. In contradistinction, known front panels have been powered by the main audio entertainment system itself. The invention allows a combination of mutually distant devices to operate as a single and coherent system, without wired connections therebetween. The RF link creates a network for data exchange between all relevant devices. In particular, the main unit may act as the network host, that registers the connected users or devices. The host will then also generate the necessary information for allowing the display to show all required messages to the user.

The RF link is advantageously designed to have a common protocol language for command, control and display information. This renders the system expandable and adaptable. In fact, customers may wish to add a ***second,*** or eventually more, remote control and/or display unit(s), so that more passengers could have a better view of the information displayed, or could give specific commands, or a selection from all commands. The various displays/controls can be equipped with different technical solutions and styles, such as a vehicle-powered CRT device for the driver, and a battery powered LED device for the rear seat. Both devices will then use the same RF protocol and the same data stream.

Inasmuch as the communication operates through RF, this solves various problems associated with the sensitivity of infra-red communications regarding the direction of the communication path, reception angle limitations, and the negative influence of sunlight. Furthermore, the RF communication needs no intermediate stations, thereby speeding up the communication process. In fact, all stations can communicate directly with the main station.

Various options allow to use the principles of the present invention to enhance and/or improve system functionality. In the first place, such control facilities that are present before upgrading through the RF principle, can be re-used by inserting a straightforward conversion module to interface to the radio frequency control and display link. Each control information will thereby be translated into a respectively associated RF command.

A similar procedure can be followed for radio and other audio information display items that are present in the original vehicle. Also here, a conversion module translates the RF display information into a format appropriate to the display facilities that are present in the vehicle. A similar approach as used for the audio facilities may be used for other vehicle-based devices that could be subject to upgrading whilst using the RF command and display bus for communication between the new control item for the facilites and the control/display items that are present in the vehicle. Striking examples of such other facilities are parking distance controllers, rear view cameras, automotive sensors for various vehicle conditions such as relating to atmospherical conditions, or switching devices such as for add-on lighting.

In particular, the solution according to the present invention is superior to earlier systems, such as those that use wired remote controls, through a communication protocol based on a voltage- or resistance-based protocol. Earlier remote displays have used a widely varying gamut of wired communication buses. A typical vehicle bus situation is the wired CAN bus that uses a unified protocol for communicating command and control data between connected stations. As recited earlier, infrared communication, although widely used, is inferior through geometrical restrictions, shadowing interference through other objects in the radiation path, and the inferior adaptability to a multi-station configuration.

The invention also relates to a vehicle audio system as claimed in Claim 6, and to various control and/or display or conversion modules being arranged for use in the system as claimed in Claim 6. Further advantageous aspects of the invention are recited in dependent Claims.

These and further features, aspects and advantages of the invention will be discussed more in detail hereinafter with reference to the disclosure of preferred embodiments of the invention, and in particular with reference to the appended Figures that illustrate:
- Figure 1,: a minimum configuration for use with the invention;
- Figure 2,: an extended configuration for use with the invention;
- Figure 3,: a network principle for use with the invention;
- Figure 4,: a multi-station configuration for use with the invention;
- Figure 5,: a configuration with RF adaptors for OEM controls/displays.

In the following description, well known circuits have been shown in block diagram form in order not to obscure the present invention in unnecessary detail. For the most part, details concerning signal generation and processing considerations and the like have been omitted inasmuch as such details are not necessary to obtain a complete understanding of the present invention and are within the skill of persons of ordinary skill in the relevant art.

Reference will now be made to the drawings, wherein depicted elements are not necessarily shown to scale and wherein like or similar elements are designated by the same reference numeral through the several views.

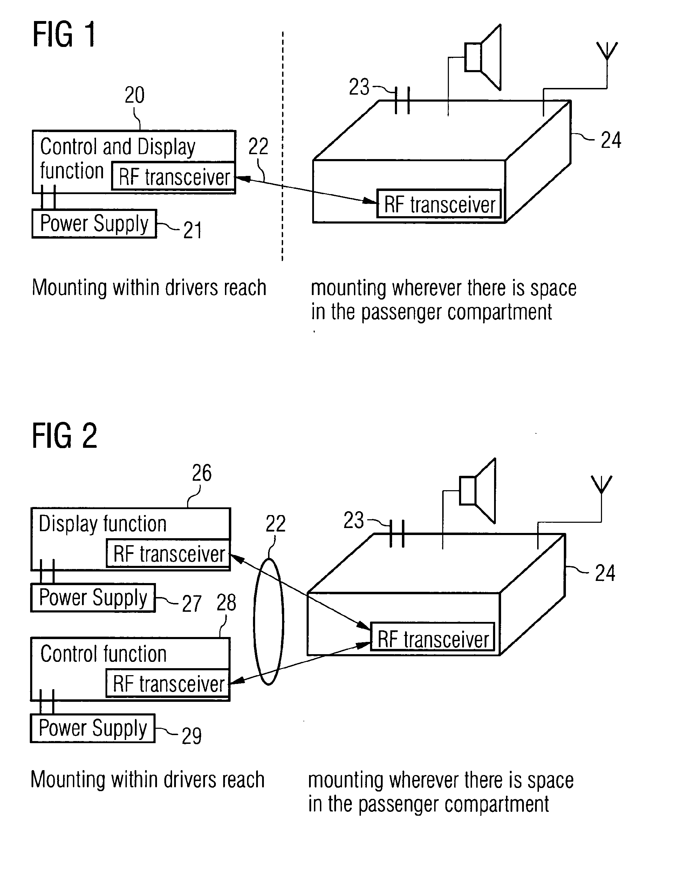

Figure 1 illustrates a minimum configuration for use with the invention. For brevity, only various system aspects have been described, but the user interface proper, as well as the detailed styling aspects, have been foregone. Here, station 20 at left comprises the control and display function associated with the user interface. The display can be visual in the form of characters, simple lights, graphics, animation, or other. In principle, speech output could be feasible. Likewise, control can be in the form of pushbuttons, toggles, rotary switches, potentiometers, or speech input. As shown, the station has a power supply connection 21 that either connects to an on-board battery or is based on a broader vehicle powering system. The latter may either be continuous, or rather switched on/off with the main ignition key. Finally, the station interfaces to RF bus/link 22 through an RF transceiver that will include conversion facilities as far as necessary for converting internal signals in station 20 to/from the RF protocol on bus/link 22. Generally, station 20 will be mounted within the driver's reach, such as in the dashboard, steering wheel, arm rests, or other places, such as being determined by the reach of the driver's arms, sighting, or other.
The main user facility is located within station 24, such as being represented by radio tuning, channel selecting, filtering and amplifying for a radio function, and correspondingly for other types of audio functionality or other purposes that have been recited supra. For brevity, no further detailing of such functionalities is presented, inasmuch as on their own they will be known to persons skilled in the art. As shown in particular, station 24 has power supply 23, and furthermore a loudspeaker connection and an antenna connection. Generally, station 24 will be mounted wherever there is sufficient space in the passenger compartment, or even in such positions as under or inserted into the dashboard. Like station 20, station 24 has an RF transceiver module that interfaces the internal signalization of station 24 to the RF protocol of interconnecting bus/link 22.

Figure 2 illustrates an extended configuration for use with the invention. Here, station 24 generally corresponds to the one shown in Figure 1. On the other hand, stations 26, 28 separate the display functionality (station 26) from the control functionality (station 28). Both stations have their respective power supply connections 27, 29, that need not be uniform across various such stations. Bus 22 is used, under the provision that it would allow a multi-station operation, such as through arbitrage among various prospecive masters, or through a single master, presumably station 24, such as would allow windows for various subaltern stations 26, 28. Notably, stations 26, 28 may be mounted at positions that are optimum for the intended user interaction, such as within line of sight (station 26) and sufficiently close within a driver person's reach (station 28).

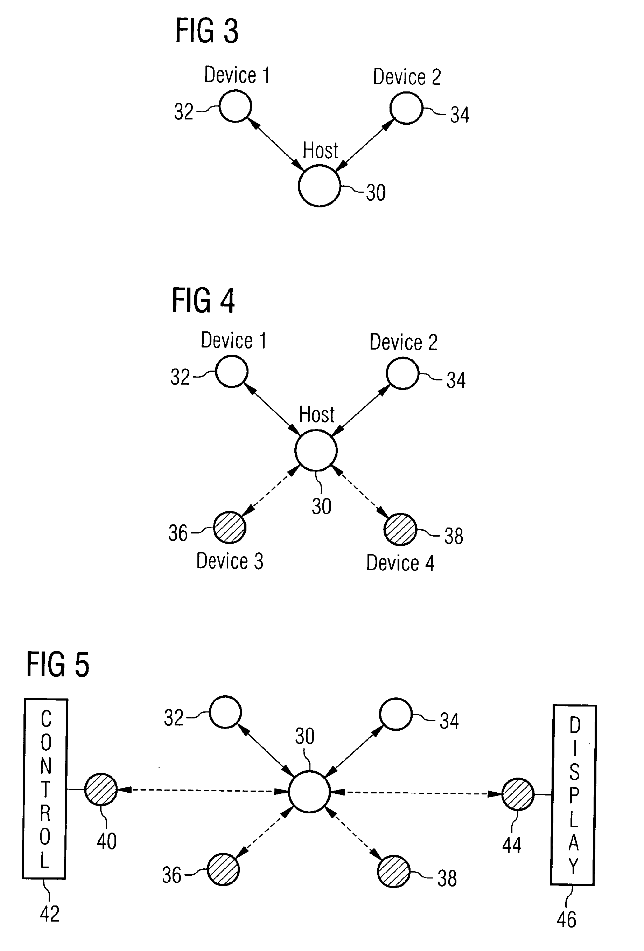

Figure 3 illustrates a network principle for use with the invention. Here, main unit 30 (such as main unit 24) is the fixed host, whereas devices 32, 34 may basically operate in a star network. Alternatively, one of the user interface stations (20, 26, 28) may operate as the fixed host.

Figure 4 illustrates a multi-station configuration for use with the invention. Here, next to the stations that are present in Figure 3, various additional displays, such as station 36 and various additional controls, such as station 38, may be added, subject to the capacity of radio frequency bus/link 22 to handle such number of stations. Any of the stations may also be a combined display and control device such as station 20.

Figure 5 illustrates a configuration with RF adaptors for OEM controls/displays. Here, the system according to Figure 4 with host 30 and stations 32-38 has been replicated. An additional control facility 42 such as an OEM product is interfaced to the RF bus through a specific converter 40. Likewise, an additional display facility 46 such as an OEM product, is interfaced to the RF bus through a specific converter 44. Persons skilled in the art will know how to construct such specific converters.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A vehicle audio entertainment unit comprising audio processing facilities (24) for converting a received input signal stream into an audio representation, and being arranged for communicating with a discrete control and/or display facility (20, 26, 28) that represents a user interface, **characterized by** said audio unit for executing said communicating comprising a radio-frequency command and control communication link (22) whilst allowing said communicating without mechanically engaging with said control and/or display facility.

2. An audio unit as claimed in Claim 1, **characterized in that** said command and control link (22) has a common protocol or language for display informations versus command or control informations.

3. An audio unit as claimed in Claim 1, **characterized in that** said command and control link (22) allows interfacing to a plurality of various said audio units as respective cooperative stations.

4. An audio unit as claimed in Claim 1, **characterized in that** said command and control link (22) allows interfacing to a plurality of said control and/or display facilities (26, 28) as respective cooperative stations.

5. An audio unit as claimed in Claim 1, **characterized in that** both said audio unit (24) and said control and/or display facilities (20, 26, 28) comprise a registration facility in order to register viz à viz said command and control link.

6. A vehicle audio system comprising one or more audio entertainment units (24) as claimed in Claim 1, **characterized by** one or more discrete control and/or display modules (20, 26, 28) that represent a user interface, being arranged for communicating with such audio entertainment unit through a radio-frequency command and control communication link (22) whilst allowing said communicating without mechanically engaging with said audio entertainment unit.

7. A system as claimed in Claim 6, furthermore **characterized by** one or more of a parking distance controller, a rear view camera, an automotive sensor, and a switching device as further control module or modules being attached to said radio frequency command and control link.

8. A control and/or display module (20, 26, 28) **characterized in that** it is arranged for use in such vehicle audio system as claimed in Claim 6.

9. A module as claimed in Claim 8, **characterized by** on-board battery powering.

10. A module as claimed in Claim 7, **characterized by** a powering input (21, 27, 29) for connection to a vehicle power output.

11. A module as claimed in Claim 10, characterized ibn that said vehicle power output is a switched power supply.

12. A conversion module (40) arranged for use in a system as claimed in Claim 6, **characterized in that** it is arranged for converting an original vehicle equipment communication protocol into a radio frequency protocol for interfacing to an aftermarket equipment item.

13. A conversion module (44) arranged for use in a system as claimed in Claim 6, **characterized in that** it is arranged for receiving a radio frequency protocol from an aftermarket equipment item for converting to an original vehicle equipment communication protocol.

14. A display module for use in a system as claimed in Claim 6, **characterized by** a translation intelligence facility for converting communication items from said radio-frequency command and control bus into various displayable messages.
